## Europäisches Patentamt
## European Patent Office
## Office européen des brevets

(11) Veröffentlichungsnummer : **0 299 187 B1**

(12) **EUROPÄISCHE PATENTSCHRIFT**

(45) Veröffentlichungstag der Patentschrift :
11.09.91 Patentblatt 91/37

(51) Int. Cl.⁵ : **F16G 13/16**

(21) Anmeldenummer : **88108717.5**

(22) Anmeldetag : **31.05.88**

(54) **Energieführungskette aus Kunststoff.**

(30) Priorität : **15.07.87 DE 3723362**

(43) Veröffentlichungstag der Anmeldung :
**18.01.89 Patentblatt 89/03**

(45) Bekanntmachung des Hinweises auf die
Patenterteilung :
**11.09.91 Patentblatt 91/37**

(84) Benannte Vertragsstaaten :
**DE ES FR GB IT**

(56) Entgegenhaltungen :
**DE-A- 3 522 886
DE-A- 3 619 049
DE-C- 3 408 912
DE-U- 8 513 491**

(73) Patentinhaber : **Gebr. Hennig GmbH
Dorfstrasse 41
W-8045 Ismaning (DE)**

(72) Erfinder : **Stöhr, Albert
Am Wiegenberg 8
W-8015 Markt Schwaben (DE)**

(74) Vertreter : **Tetzner, Volkmar, Dr.-Ing. Dr. jur.
Van-Gogh-Strasse 3
W-8000 München 71 (DE)**

## Beschreibung

Die Erfindung betrifft eine Energieführungskette entsprechend dem Oberbegriff des Anspruches 1.

Durch die DE-A-3619049 ist eine Energieführungskette bekannt, bei der die einzelnen Kettenglieder einen zur Aufnahme der Energieführungsleitungen dienenden, U-förmigen Rahmen enthalten, der an seiner Oberseite durch eine lösbare Traverse abgeschlossen ist. Die Traverse ist hierbei an beiden Enden mit federnden Rastelementen versehen, die in lösbaren Eingriff mit den Seitenwänden des Rahmens kommen.

Nachteilig ist bei dieser Ausführung, daß für Kettenglieder unterschiedlicher Breite gesonderte Rahmen hergestellt werden müssen, was bei einteiliger Herstellung dieser Rahmen aus Kunststoff hohe Werkzeugkosten bedingt. Bei dieser bekannten Ausführung besteht weiterhin die Gefahr, daß die federnden Rastelemente beim Lösen der Traversen durch ein ungeschicktes Hantieren beschädigt oder gar abgebrochen werden.

Durch das DE-U-8513491 ist weiterhin eine Energieführungskette (entsprechend dem Oberbegriff des Anspruches 1) bekannt, bei der die einzelnen Kettenglieder jeweils aus seitlichen Laschen und zwei sie verbindenden Traversen bestehen. Eine solche Ausführung gestattet es, unter Verwendung weniger Grundelemente Kettenglieder unterschiedlicher Breite herzustellen.

Bei dieser bekannten Ausführung weisen die Traversen an ihren beiden Enden im Querschnitt T-förmige Steckansätze auf, die in entsprechende Steckaufnahmen der Laschen eingreifen und die an ihrer Außenseite mit federnden Rastzungen versehen sind, die sich vom Ende der Steckteile zur Ansatzstelle hin erstrecken. Das Lösen der Rastverbindung erfolgt mittels eines Werkzeuges, das von der Außenseite der Lasche bzw. von der Ober- bzw. Unterseite der Traverse durch einen Schlitz eingeführt wird.

Nachteilig bei dieser bekannten Konstruktion ist vor allem, daß das Lösen der Rastverbindung ein umständliches Hantieren bedingt, wobei die Gefahr einer Beschädigung der federnden Rastzungen besteht. Die bekannte Konstruktion weist ferner an den Enden der Traversen im Bereich der Rastzungen verhältnismäßig große, nach außen hin offene Ausnehmungen auf, in denen sich Schmutz und Fremdkörper (beispielsweise Späne) festsetzen können, was das Lösen der Rastverbindung unter Umständen erheblich beeinträchtigt.

Der Erfindung liegt daher die Aufgabe zugrunde, eine Energieführungskette entsprechend dem Oberbegriff des Anspruches 1 so auszubilden, daß das Lösen der Traversen auf besonders einfache Weise möglich ist und hierbei die empfindlichen Teile der Rastverbindung auch bei einem ungeschickten Hantieren zuverlässig gegen Beschädigung geschützt sind.

Diese Aufgabe wird erfindungsgemäß durch die kennzeichnenden Merkmale des Anspruches 1 gelöst.

Zweckmäßige Ausgestaltungen der Erfindung sind Gegenstand der Unteransprüche.

Ein Ausführungsbeispiel der Erfindung ist in der Zeichnung veranschaulicht. Es zeigen

| Fig. 1 | eine ganz schematisch gehaltene Teilansicht eines Gliedes der erfindungsgemäßen Energieführungskette, |
| --- | --- |
| Fig. 2 | eine Aufsicht auf das Kettenglied gemäß Fig. 1, |
| Fig. 3 | einen Schnitt längs der Linie III-III der Fig.2 (Einzelheiten x gemäß Fig. 1), |
| Fig. 4 | einen Schnitt längs der Linie IV-IV der Fig. 3, |
| Fig. 5 | einen Schnitt längs der Linie V-V der Fig. 1, |
| Fig. 6 und 7 | Längsschnitte durch zwei Varianten der Kette. |

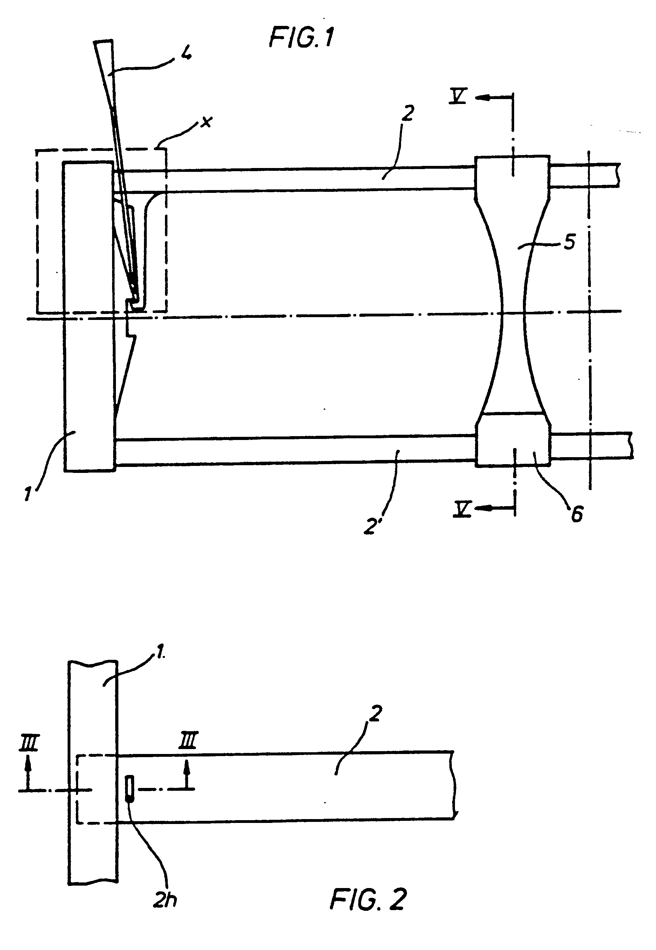

Die in Fig. 1 und 2 nur ganz schematisch veranschaulichte Energieführungskette aus Kunststoff enthält zwei seitliche Laschenketten, von denen in den Fig. 1 und 2 nur eine Lasche 1 der linken Laschenkette angedeutet ist. Die einzelnen Laschen der Laschenketten sind in bekannter Weise schwenkbeweglich miteinander verbunden, wobei ihre Schwenkbewegung durch Anschläge begrenzt ist.

In Abständen zwischen den Laschenketten sind obere und untere Traversen 2, 2' paarweise angeordnet. Sie verbinden jeweils eine rechte und linke Lasche 1 zu einem starren Rahmen, in dessen Innenraum die (in der Zeichnung nicht veranschaulichten) Energieführungsleitungen untergebracht sind, wobei zwischen den Traversen 2, 2' noch Trennstücke zur Abgrenzung der einzelnen Kabelräume angeordnet sein können.

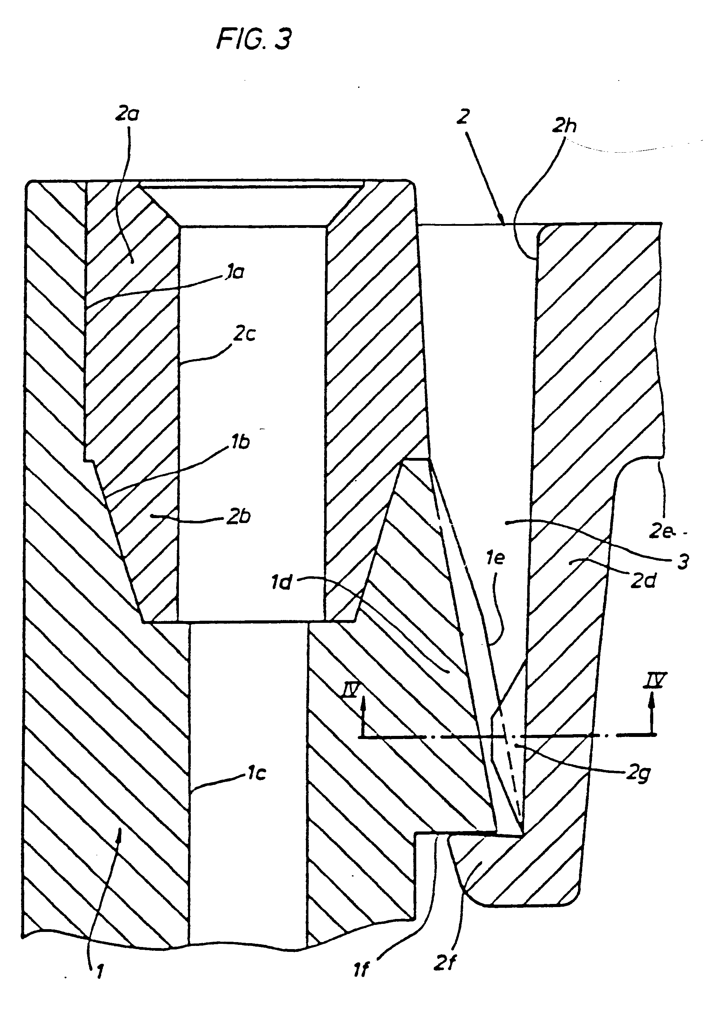

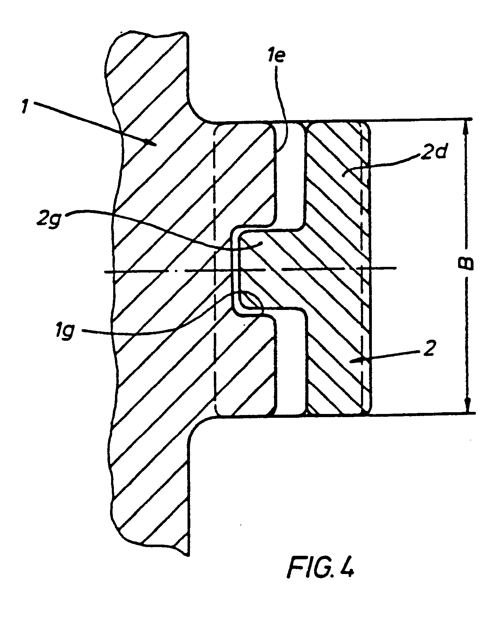

Die erfindungsgemäße Verbindung zwischen den Traversen und Laschen ist im einzelnen in den Fig. 3 und 4 veranschaulicht. Da alle Verbindungsstellen identisch gestaltet sind, genügt im folgenden die Beschreibung der Verbindung der Traverse 2 mit der Lasche 1.

Die Traverse 2 greift mit ihrem Ende 2a in eine rechteckige, zur Traverse hin offene Aussparung 1a formschlüssig ein. An der Unterseite des Endes 2a der Traverse 2 ist ein konischer Führungsansatz 2b vorgesehen, der in eine entsprechende konische Ausnehmung 1b der Lasche 1 eingreift.

Das Ende 2a der Traverse 2 ist mit einem Durchbruch 2c versehen, an den sich ein Durchbruch 1c der Lasche 1 anschließt. Diese Durchbrüche 1c, 2c können zur Aufnahme einer Schraube dienen, mit der die Traverse 2 (zusätzlich zu der im folgenden beschriebenen Rastverbindung) mit der Lasche 1 verschraubt werden kann.

Einstückig mit dem Hauptteil der Traverse 2 ist weiterhin eine Rastzunge 2d ausgebildet, die mit Abstand von dem Führungsansatz 2b derart angeordnet ist, daß ihre Wurzel an der Innenseite 2e der Traverse 2 ansetzt.

Die Rastzunge 2d besitzt am Zungenende einen zur Lasche 1 weisenden Rastvorsprung 2f und ist außerdem auf ihrer Außenseite, nahe dem Rastvorsprung 2f, mit einem Führungsvorsprung 2g versehen.

Wie Fig. 4 erkennen läßt, erstreckt sich der Führungsvorsprung 2g nur über einen Teil der (in Achsrichtung der Energieführungskette gemessenen) Breite B der Rastzunge 2d.

Der zwischen der Lasche 1 und der Traverse 2 vorhandene Zwischenraum 3 wird auf der Laschenseite durch einen Rastvorsprung 1d begrenzt, der von einer schrägen Führungsfläche 1e und einer Rastfläche 1f gebildet wird.

Die schräge Führungsfläche 1e der Lasche 1 ist mit einer Nut 1g versehen, die zur Aufnahme des Führungsvorsprunges 2g der Rastzunge 2d dient (vgl. Fig. 4).

Die freie Länge der Rastzunge 2d ist wesentlich größer als die freie Länge des konischen Führungsansatzes 26. Wie sich aus Fig. 1 ergibt, ist die freie Länge der Rastzunge 2d nur wenig kleiner als der halbe lichte Abstand der beiden Traversen 2, 2'. Die federnden Rastzungen 2d besitzen auf diese Weise auch bei stabiler Ausführung eine ausgezeichnete Federelastizität.

Im Bereich zwischen dem Führungsansatz 2b und der Rastzunge 2d ist die Traverse 2 mit einem Durchbruch 2h versehen, durch den ein (in Fig. 1 nur schematisch angedeuteter) Schraubenzieher 4 bis zu einer vorgegebenen Tiefe (begrenzt durch die Abmessungen des Durchbruches 2h) in den Zwischenraum 3 zwischen der Rastzunge 2d und dem Rastvorsprung 1d einführbar ist.

In der in der Zeichnung veranschaulichten Lage befindet sich der Rastvorsprung 2f der Rastzunge 2d in Eingriff mit der Rastfläche 1f des Rastvorsprunges 1d der Lasche 1. Die Traverse 2 und die Lasche 1 sind auf diese Weise fest miteinander verbunden, wobei der konische Führungsansatz 2b der Traverse 2 fest in die konische Ausnehmung 1b gepreßt wird.

Wird nun der Schraubenzieher 4 durch den Durchbruch 2h in den Zwischenraum 3 eingeführt (und zwar zweckmäßig je ein Schraubenzieher im Bereich beider Enden der Traverse), so trifft die Schneide des Schraubenziehers auf die schräge Führungsfläche 1e der Lasche 1 und sodann auf den Führungsvorsprung 2g der Rastzunge 2d. Beim weiteren Eindrücken des Schraubenziehers 4 wird die Rastzunge 2d über den Führungsvorsprung 2g so weit (in Fig. 3 nach rechts) verschwenkt, daß der Rastvorsprung 2f von der Rastfläche 1f des Rastvorsprunges 1d freikommt. In diesem Augenblick kann sich die in der Eingriffsstellung auch in Längsrichtung elastisch etwas verformte Rastzunge 2d entspannen, so daß sich der konische Führungsansatz 2b von der Ausnehmung 1b abhebt und die Traverse 2 sich geringfügig nach oben bewegt. Wird der Schraubenzieher 4 nun aus dem Zwischenraum 3 herausgezogen, so kann der Rastvorsprung 2f der Rastzunge 2d nicht erneut in Eingriff mit der Rastfläche 1f kommen, sondern legt sich an das untere Ende der schrägen Führungsfläche 1e an. Die Entriegelungslage bleibt daher aufrechterhalten, während der Schraubenzieher 4 herausgezogen wird. Sodann kann die Traverse 2 bequem nach oben abgenommen werden.

Beim Aufsetzen der Traverse 2 auf die Lasche 1 (zum Zwecke der Herstellung der Verbindung) gewährleistet einerseits der konische Führungsansatz 2b (im Zusammenwirken mit der konischen Ausnehmung 1b der Lasche 1) und andererseits der Führungsvorsprung 2g der Rastzunge 2d (im Zusammenwirken mit der Nut 1g der Führungsfläche 1e) ein sicheres Erreichen der Verriegelungslage. Im letzten Teil dieses Eindrückvorganges wird die Traverse 2 so weit elastisch verformt, daß beim Einschnappen des Rastvorsprunges 2f hinter die Rastfläche 1f der konische Führungsansatz 2b mit starker axialer Pressung auf seinen Sitz (Ausnehmung 1b) gedrückt wird. Dadurch ist in der Verriegelungslage eine absolut starre, verwindungssteife Verbindung zwischen Lasche 1 und Traverse 2 gewährleistet.

Bei der erfindungsgemäßen Gestaltung sind die federnden Rastzungen 2d zuverlässig gegen eine Beschädigung durch ungeschicktes Hantieren geschützt. Da sich der Schraubenzieher nur bis zu einer vorgegebenen Tiefe in den Zwischenraum 3 einschieben läßt, kann auf die Rastzungen 2d keine unzulässig große, zu einer Beschädigung führende Beanspruchung ausgeübt werden. Vorteilhaft ist in diesem Zusammenhang insbesondere, daß das Entriegeln der Rastverbindung nur eine einfache, geradlinige Einschubbewegung des Schraubenziehers erfordert, nicht dagegen eine Schwenk- oder Kippbewegung, die bei nicht sachgemäßer Hantierung leicht zu einer Beschädigung der federnden Rastzungen führen könnte.

Der Zwischenraum 3 zwischen der Lasche 1 und der federnden Rastzunge 2 ist nach außen hin bis auf den verhältnismäßig kleinen Durchbruch 2h geschlossen. Die Gefahr einer störenden Verschmutzung dieses Zwischenraumes 3, insbesondere ein Eindringen größerer Späne, ist auf diese Weise mit Sicherheit ausgeschlossen.

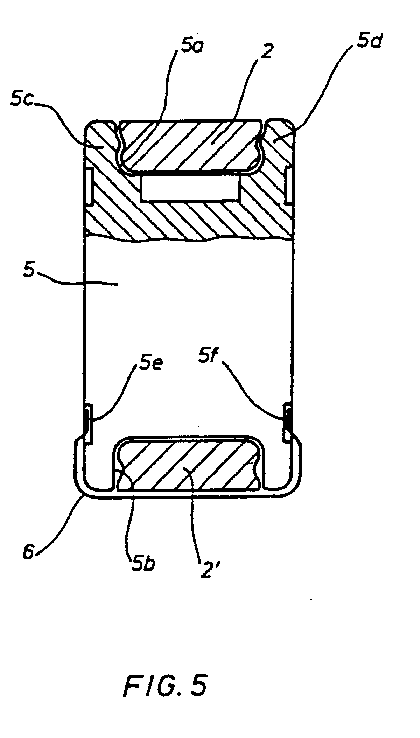

Zwischen den Traversen 2, 2' können in üblicher Weise Trennstege 5 angeordnet werden, um die einzelnen Energieführungsleitungen in ihrer Relativlage zu halten. Fig. 5 veranschaulicht einen Schnitt durch einen solchen Trennsteg, aus dem die Verbindung mit den Traversen 2, 2' ersichtlich ist.

Der Trennsteg 5 ist mit einer oberen und einer unteren Ausnehmung 5a, 5b versehen, die zur Aufnahme der Traverse 2 bzw. 2' dient. Die obere Ausnehmung 5a ist so profiliert, daß sich eine lösbare Formschluß-Schnappverbindung zwischen der Traverse 2 und dem Trennsteg 5 ergibt. Zu diesem Zweck sind die Seitenwände 5c, 5d, die die Ausnehmung 5a begrenzen, mit einer Hinterschneidung versehen, hinter die die Traverse 2 im montierten Zustand eingreift.

Die untere Ausnehmung 5b ist demgegenüber mit glatten, vertikal verlaufenden Seitenwänden versehen. Die Traverse 2' kann in diese Ausnehmung 5b lose eingefügt sein, so daß dann, wenn die Traverse 2 in der bereits erläuterten Weise von den Laschen gelöst wird, zugleich auch die Trennstücke 5 mit der oberen Traverse 2 abgezogen werden.

Eine in Fig. 5 angedeutete Alternative besteht darin, die Traverse 2' mittels einer aufgesetzten Federklammer 6 in der Ausnehmung 5b zu haltern. Eine solche zusätzliche Sicherung der Verbindung zwischen der Traverse 2' und den Trennstegen 5 kann vor allem bei hohen Belastungen der Energieführungskette (z.B. bei großen Kabeln) zweckmäßig sein.

Darüber hinaus besteht ferner die Möglichkeit, die obere Traverse 2 zusätzlich zu der bereits erläuterten Formschlußverbindung noch über eine Federklammer 6 mit den Trennstegen 5 zu verbinden. Die Traversen 2, 2' können entweder aus Kunststoff oder aus Metall, vorzugsweise Aluminium, hergestellt sein.

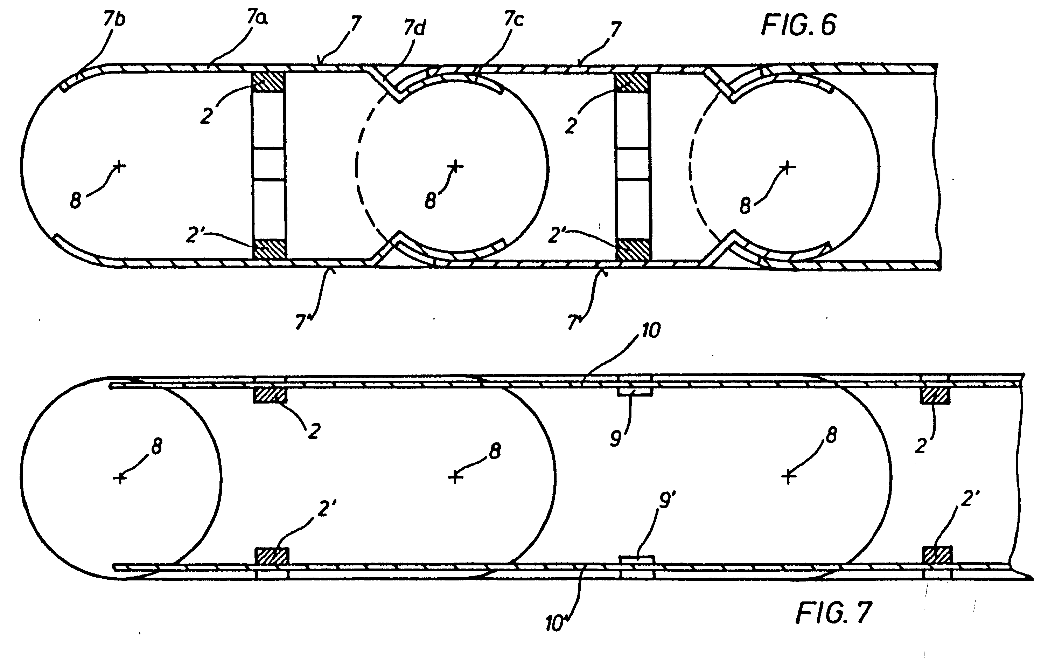

Die Fig. 6 und 7 zeigen Ausführungsbeispiele für eine mögliche Abdeckung der oberen und unteren Breitseite der Energieführungskette.

Bei der Variante gemäß Fig. 6 sind mit den einzelnen Traversen 2, 2' jeweils Abdeckelemente 7, 7' verbunden, die den Innenraum der Energieführungskette nach außen hin abschließen und die gemeinsam mit den Traversen lösbar sind. Die Abdeckelemente 7, 7' können mit den Traversen 2, 2' beispielsweise verschraubt, vernietet oder durch eine druckknopfartige Verbindung lösbar verbunden sein.

Die Abdeckelemente 7 bestehen jeweils aus einem im wesentlichen ebenen Teil 7a, zwei kreisbogenförmig gekrümmten Teilen 7b und 7c sowie einem schrägen Verbindungsstück 7d. Der Krümmungsmittelpunkt der gekrümmten Teile 7b und 7c fällt mit den Gelenkachsen 8 der Kettenglieder zusammen. Dabei überdecken sich die kreisbogenförmig gekrümmten Teile 7b und 7c benachbarter Abdeckelemente 7 in der aus Fig. 6 ersichtlichen Weise, so daß einerseits eine Schwenkbewegung der Kettenglieder (zwischen einer Strecklage und einer maximal gekrümmten Lage) möglich ist und in allen Relativstellungen der Innenraum der Kette nach außen hin abgedeckt ist.

Die Abdeckelemente 7 sind zweckmäßig mit Durchbrüchen versehen, durch die ein zum Lösen der Traversen 2 dienender Schraubenzieher eingesteckt werden kann, wie dies anhand der Fig. 1 bis 4 bereits erläutert wurde. Die Traversen 2 können dann gewünschtenfalls gemeinsam mit den hiermit verbundenen Abdeckelementen 7 gelöst werden. Selbstverständlich sind im Rahmen der Erfindung jedoch auch Ausführungen möglich, bei denen die Abdeckelemente 7 gesondert von den Traversen 2 abgenommen werden können.

Beim Ausführungsbeispiel gemäß Fig. 6 ist mit jedem Glied der Laschenkette je eine obere und eine untere Traverse 2, 2' verbunden.

Fig. 7 zeigt demgegenüber eine Ausführung, bei der Traversen 2, 2' nur mit jedem zweiten Glied der beiden Laschenketten verbunden sind.

An den nicht mit Traversen 2, 2' bestückten Kettengliedern sind bei diesem Ausführungsbeispiel Halterungsstücke 9, 9' vorgesehen, die zur Aufnahme eines oberen und unteren Abdeckbandes 10, 10' dienen. Die Halterungsstücke 9, 9' können dabei in denselben Ausnehmungen der Laschen 1 vorgesehen werden, die bei den mit Traversen ausgerüsteten Kettengliedern zur Aufnahme der Traversen 2, 2' dienen.

Zweckmäßig besitzen die beiden Kettenlaschen eine glatte Außenkontur, so daß die Kette gewünschtenfalls auch auf einer Seitenfläche laufen kann.

## Patentansprüche

1. Energieführungskette aus Kunststoff, enthaltend

   a)   zwei seitliche Laschenketten, bestehend aus schwenkbeweglich miteinander verbundenen Laschen (1),

   b)   sowie in Abständen zwischen den Laschenketten paarweise angeordnete Traversen (2, 2'),

   c)   wobei einstückig mit den Traversen Führungsansätze (2b) ausgebildet sind, die formschlüssig in Ausnehmungen (1b) der Laschen eingreifen

   d)   und wobei ferner einstückig mit den Traversen Rastzungen (2d) ausgebildet sind, die in Längsrichtung der Traversen federn und über einen am Zungenende vorgesehenen Rastvorsprung (2f) in lösbarem Rasteingriff mit den Laschen stehen, gekennzeichnet durch folgende Merkmale :

   e)   die Führungsansätze (2b) und die zur ihrer Aufnahme bestimmten Ausnehmungen (1b) der Laschen (1) sind konisch ausgebildet ;

f) die Rastzungen (2d) sind mit Abstand von den Führungsansätzen (2b) derart angeordnet, daß ihre Wurzel an der Innenseite der Traversen (2) ansetzt ;

g) zwischen den Rastzungen (2d) und den benachbarten Laschen (1) ist ein Zwischenraum (3) vorhanden, der auf der Laschenseite durch einen Rastvorsprung (1d) begrenzt wird, der von einer schrägen Führungsfläche (1e) und einer Rastfläche (1f) gebildet wird ;

h) die Rastzungen (2d) sind mit einem der schrägen Führungsfläche (1e) der benachbarten Lasche gegenüberliegenden Führungsvorsprung (2g) versehen ;

i) im Bereich zwischen den Führungsansätzen (2b) und den ihnen benachbarten Rastzungen (2d) sind die Traversen (2) mit Durchbrüchen (2h) versehen, durch die ein zur Aufhebung des Rasteingriffes der Rastzungen dienender Schraubenzieher (4) bis zu einer vorgegebenen Tiefe in den Zwischenraum (3) einsteckbar ist, wobei die Formgebung und die Abmessungen des Rastvorsprunges (1d) der Lasche (1) und des Führungsvorsprunges (2g) der Rastzunge (2d) derart gewählt sind, daß beim Einstecken des Schraubenziehers (4) bis zur vorgegebenen Tiefe der Rasteingriff von Rastzunge und Lasche aufgehoben wird.

2. Energieführungskette nach Anspruch 1, dadurch gekennzeichnet, daß sich der Führungsvorsprung (2g) nur über einen Teil der (in Achsrichtung der Energieführungskette gemessenen) Breite (B) der Rastzunge (2d) erstreckt und die schräge Führungsfläche (1e) der Lasche (1) eine zur Aufnahme des Führungsvorsprunges bestimmte Nut (1g) aufweist.

3. Energieführungskette nach Anspruch 1, dadurch gekennzeichnet, daß die freie Länge der Rastzunge (2d) größer als die freie Länge des Führungsansatzes (2b) ist.

4. Energieführungskette nach Anspruch 3, dadurch gekennzeichnet, daß die freie Länge der Rastzunge (2d) nur wenig kleiner als der halbe lichte Abstand der beiden Traversen (2, 2') ist.

5. Energieführungskette nach Anspruch 1, dadurch gekennzeichnet, daß der Führungsansatz (2b) der Traverse (2) zusätzlich mit der Lasche (1) verschraubbar ist.

6. Energieführungskette nach Anspruch 1, dadurch gekennzeichnet, daß mit den Traversen (2, 2') Abdeckelemente (7, 7') verbunden sind, die den Innenraum der Energieführungskette nach außen hin abschließen und gemeinsam mit den Traversen lösbar verbunden sind.

7. Energieführungskette nach Anspruch 6, dadurch gekennzeichnet, daß die Abdeckelemente (7, 7') mit Durchbrüchen versehen sind, durch die ein zum Lösen der Traversen (2) dienender Schraubenzieher einsteckbar ist, so daß die Traversen (2) gemeinsam mit den hiermit verbundenen Abdeckelementen (7) lösbar sind.

8. Energieführungskette nach Anspruch 6, dadurch gekennzeichnet, daß mit jedem Glied der Laschenkette je eine Traverse (2, 2') verbunden ist.

9. Energieführungskette nach Anspruch 1, dadurch gekennzeichnet, daß aufeinanderfolgende Glieder der Laschenketten abwechselnd mit Traversen (2, 2') und mit zur Aufnahme eines Abdeckbandes (10, 10') dienenden Halterungsstücken (9, 9') versehen sind.

10. Energieführungskette nach Anspruch 1, dadurch gekennzeichnet, daß zwischen den Traversen (2, 2') Trennstege (5) angeordnet sind, die vorzugsweise mit der einen Traverse (2') über eine lösbare Klammer (6) und mit der anderen Traverse (2) über eine lösbare Formschluß-Schnappverbindung verbunden sind.

11. Energieführungskette nach Anspruch 1, dadurch gekennzeichnet, daß die beiden Laschenketten eine glatte Außenkontur aufweisen.

## Claims

1. Energy-conducting chain made from plastics material, containing

a) two lateralside plate chains consisting of side plates (1) which are pivotably connected to one another,

b) and cross-pieces (2, 2') which are arranged in pairs at intervals between the side plate chains,

c) in which extensions (2b) which engage in a form-locking manner in recesses (1b) in the side plates are constructed integrally with the cross-pieces,

d) and in which stop tongues (2d) which are sprung in the longitudinal direction of the cross-pieces and are in releasable stop engagement with the side plates by means of a stop projection (2f) at the end of the tongue are constructed integrally with the cross-pieces, characterised by the following features :

e) the extensions (2b) and the recesses (1b) in the side plates (1) which are intended to receive them are of conical construction ;

f) the stop tongues (2d) are arranged spaced from the extensions (2b) in such a way that their roots are attached to the inner surface of the cross-pieces (2) ;

g) a space (3), which is defined on the side plate side by a stop projection (1d) which is formed by an inclined guide surface (1e) and a stop surface (1f), is formed between the stop tongues (2d) and the adjacent side plates (1) ;

h) the stop tongues (2d) are provided with a guide projection (2g) which lies opposite the inclined guide surface (1e) of the adjacent side plate ;

i) in the region between the extensions (2b) and the stop tongues (2d) adjacent thereto the cross-pieces (2) are provided with openings (2h) through which a screwdriver (4) which serves to release the stop engagement of the stop tongues can be inserted to a predetermined depth into the space (3), and the shaping and dimensioning of the stop projection (1d) of the side plate (1) and the guide projection (2g) of the stop tongue (2d) are chosen so that when the screwdriver (4) is inserted to the predetermined depth the stop engagment of the stop tongue and the side plate is released.

2. Energy-conducting chain as claimed in claim 1, characterised in that the guide projection (2g) only extends over a part of the width (B) of the stop tongue (2d) (measured in the axial direction of the energy-conducting chain) and the inclined guide surface (1e) of the side plate (1) has a groove (1g) intended to receive the guide projection.

3. Energy-conducting chain as claimed in claim 1, characterised in that the free length of the stop tongue (2d) is greater than the free length of the extension (2b).

4. Energy-conducting chain as claimed in claim 3, characterised in that the free length of the stop tongue (2d) is only slightly less than half of the internal distance between the two cross-pieces (2, 2').

5. Energy-conducting chain as claimed in claim 1, characterised in that the extension (2b) of the cross-piece (2) can additionally be screwed to the side plate (1).

6. Energy-conducting chain as claimed in claim 1, characterised in that cover elements (7, 7'), which close off the interior of the energy-conducting chain towards the exterior and are releasably connected together with the cross-pieces (2, 2'), are connected to the cross-pieces (2, 2').

7. Energy-conducting chain as claimed in claim 6, characterised in that the cover elements (7, 7') are provided with opening through which a screwdriver which serves to release the cross-pieces (2) can be inserted so that the cross-pieces (2) are releasable together with the cover elements (7) connected thereto.

8. Energy-conducting chain as claimed in claim 6, characterised in that a cross-piece (2, 2') is connected to each link of the side plate chain.

9. Energy-conducting chain as claimed in claim 1, characterised in that successive links of the side plate chains are provided alternately with cross-pieces (2, 2') and with retaining pieces (9, 9') which serve to receive a cover strip (10, 10').

10. Energy-conducting chain as claimed in claim 1, characterised in that separators (5) which are preferably connected to one cross-piece (2') by a releasable clip (6) and to the other cross-piece 12) by a releasable form-locking snap connection are arranged between the cross-pieces (2, 2').

11. Energy-conducting chain as claimed in claim 1, characterised in that the two side plate chains have a smooth outer contour.

## Revendications

1. Chaise porteuse en matière synthétique pour lignes de transport d'énergie, comprenant :

a) deux chaînes latérales articulées se composant de maillons (1) reliés par articulation,

b) ainsi que des traverses (2, 2') disposées par paires placées à distance les unes des autres entre les chaînes articulées,

c) des appendices de guidage (2b), qui sont monobloc avec les traverses, se logeant par complémentarité de formes dans des cavités (1b) des maillons,

d) et par ailleurs des baguettes (2d), qui sont monobloc avec les traverses et qui sont élastiques dans la direction de la longueur de ces dernières, s'assemblant de manière amovible avec les maillons par un épaulement formant cran d'arrêt (2f) prévu à l'extrémité de la baguette, caractérisée par les particularités suivantes :

e) les appendices de guidage (2b) et les cavités (1b) des maillons (1) destinées à leur logement sont coniques ;

f) les baguettes à cran d'arrêt (2d) sont disposées à distance des appendices de guidage (2b) de manière que leur base se raccorde au côté intérieur des traverses (2) ;

g) un intervalle (3) présent entre les baguettes à cran d'arrêt (2d) et les maillons voisins (1) est délimité du côté des maillons par une saillie à cran d'arrêt (1d) qui est formée d'une surface oblique de guidage (1) et d'une surface formant cran d'arrêt (1f) ;

h) les baguettes à cran d'arrêt (2d) comportent une protubérance de guidage (2g) qui est en face de la surface oblique de guidage (1e) du maillon voisin ;

i) les traverses (2) comportent, entre les appendices de guidage (2b) et les baguette à cran d'arrêt (2d) qui sont voisines de ces derniers, des passages (2h) par lesquels il est possible d'introduire dans l'intervalle (3), jusqu'à une profondeur prédéterminée, un tournevis (4) destiné à supprimer la retenue par encliquetage du cran d'arrêt des baguettes, la conformation et les cotes de la saillie à cran d'arrêt (1d) du maillon (1) et de la protubérance de guidage (2g) de la baguette à cran d'arrêt (2d) étant adoptées de manière que la retenue par crans d'arrêt entre la baguette et le maillon soit supprimée par pénétration du tournevis (4) jusqu'à la profondeur prédéterminée.

2. Chaise porteuse pour lignes de transport d'énergie selon la revendication 1, caractérisée en ce que la protubérance de guidage (2g) ne se prolonge que sur une partie de la largeur (B) (mesurée dans la direction de l'axe de la chaise porteuse) de la baguette à cran d'arrêt (2d) et la surface oblique de guidage (1e) du maillon (1) comporte une rainure (1g) de logement de la protubérance de guidage.

3. Chaise porteuse pour lignes de transport d'énergie selon la revendication 1, caractérisée en ce que la longueur libre de la baguette à cran d'arrêt (2d) est supérieure à la longueur libre de l'appendice de guidage (2b).

4. Chaise porteuse pour lignes de transport d'énergie selon la revendication 3, caractérisée en ce que la longueur libre de la baguette à cran d'arrêt (2d) n'est que peu inférieure à la moitié de la distance d'ouverture comprise entre les deux traverses (2, 2').

5. Chaise porteuse pour lignes de transport d'énergie selon la revendication 1, caractérisée en ce que l'appendice de guidage (2b) de la traverse (2) peut accessoirement se visser sur le maillon (1).

6. Chaise de support pour lignes de transport d'énergie selon la revendication 1, caractérisée en ce que des éléments de couverture (7, 7'), qui sont reliés aux traverses (2, 2'), ferment vers l'extérieur le volume interne de la chaise porteuse et sont reliés de manière amovible à cette dernière avec les traverses.

7. Chaise porteuse pour lignes de transport d'énergie selon la revendication 6, caractérisée en ce que les éléments de couverture (7, 7') comportent des passages par lesquels il est possible d'introduire un tournevis servant au démontage des traverses (2), de manière que les traverses (2) soient démontables avec les éléments de couverture (7) qui leur sont reliés.

8. Chaise porteuse pour lignes de transport d'énergie selon la revendication 6, caractérisée en ce qu'une traverse (2, 2') est reliée à chacun des chaînons des chaînes articulées.

9. Chaise porteuse pour lignes de transport d'énergie selon la revendication 1, caractérisée en ce que les chaînons successifs des chaînes articulées sont équipés en alternance de traverses (2, 2') et de pièces de fixation (9, 9') destinées à supporter une bande de couverture (10, 10').

10. Chaise porteuse pour lignes de transport d'énergie selon la revendication 1, caractérisée en ce que des entretoises intercalaires (5) disposées entre les traverses (2, 2') sont reliées de préférence à l'une des traverses (2') par une agrafe amovible (6) et à l'autre traverse (2) par un assemblage amovible à déclic par complémentarité de formes.

11. Chaise porteuse pour lignes de transport d'énergie selon la revendication 1, caractérisée en ce que les deux chaînes articulées ont un contour extérieur lisse.

## FIG.1

## FIG. 2

# FIG. 3

FIG. 4

FIG. 5

FIG.6

FIG.7

EP 0 299 187 B1